Europäisches Patentamt

European Patent Office

Office européen des brevets

(19)

(11) Veröffentlichungsnummer: **0 274 095 B1**

(12) **EUROPÄISCHE PATENTSCHRIFT**

(45) Veröffentlichungstag der Patentschrift: 12.06.91

(51) Int. Cl.⁵: **B29C 47/20**, B29C 47/28

(21) Anmeldenummer: 87118673.0

(22) Anmeldetag: 16.12.87

(54) Co-Extrusionskopf.

(30) Priorität: 07.01.87 DE 3700237

(43) Veröffentlichungstag der Anmeldung:
13.07.88 Patentblatt 88/28

(45) Bekanntmachung des Hinweises auf die
Patenterteilung:
12.06.91 Patentblatt 91/24

(84) Benannte Vertragsstaaten:
AT BE CH ES FR GB GR IT LI NL SE

(56) Entgegenhaltungen:
DE-A- 2 706 882
DE-B- 1 218 708
GB-A- 127 117
US-A- 4 365 949

(73) Patentinhaber: **BEKUM Maschinenfabriken
GmbH**
**Lankwitzerstrasse 14/15**
**W-1000 Berlin 42(DE)**

(72) Erfinder: **Becker, Rudolf**
**Konradenstrasse 32**
**W-1000 Berlin 47(DE)**
Erfinder: **Beyer, Hans**
**Malteserstrasse 48**
**W-1000 Berlin 46(DE)**
Erfinder: **Pohl, Harald**
**Kottbusser Damm 79**
**W-1000 Berlin 61(DE)**
Erfinder: **Neubauer, Wilhelm, Dr.**
**Bismarckstrasse 53**
**W-1000 Berlin 39(DE)**

(74) Vertreter: **Huss, Carl-Hans, Dipl.-Ing.**
**Patentanwalt Griesstrasse 3 a Postfach 14 54**
**W-8100 Garmisch-Partenkirchen(DE)**

## Beschreibung

Die Erfindung betrifft einen Co-Extrusionskopf für die kontinuierliche Herstellung von als Vorformlinge in Blasformen weiter zu verarbeitenden, co-extrudierten Schläuchen aus mehreren Kunststoffschichten. Diese Schichten schließen meist eine oder mehrere Trägerschichten, eine oder seltener mehrere Sperrschichten und zwischen diesen Haftvermittlerschichten ein. Die Schichten des Schlauches werden im Extrusionskopf in koaxial angeordneten, ringförmigen, von zugehörigen Extrudern gespeisten Speisekanälen gebildet, die ineinander einmünden, bevor der fertige Schlauch durch eine Düse austritt Ein solches Co-Extrusionskopf ist aus der US-A-4522775 bekannt.

Die Erfindung richtet sich insbesondere auf jene in der Praxis vorherrschenden Fälle, in denen die einzelnen vorgenannten Schichten unterschiedliche chemische und physikalische Eigenschaften haben, die auf dem unterschiedlichen Zweck derselben beruhen. Die Trägerschichten sollen nämlich dem in einer Blasform hergestellten Endprodukt die erforderliche Festigkeit verleihen, während Aufgabe der Sperrschicht ist, die Diffusion von Bestandteilen des Inhalts des geblasenen Hohlkörpers zu verhindern. Die Sperrschicht besteht meist aus einem verhältnismäßig teuren Material und soll infolgedessen möglichst dünn sein. Da diese Sperrschicht häufig nicht ohne weiteres eine zufriedenstellende Verbindung mit den Trägerschichten eingeht, ist zwischen diesen Schichten jeweils eine Haftvermittlerschicht angeordnet, die ebenfalls verhältnismäßig dünn sein soll.

In bekannten Co-Extrusionsköpfen werden die Kunststoffschichten schrittweise zusammengeführt, zunehmend gemeinsam transportiert und schließlich zu einem einzigen Schlauch vereinigt, der aus der Düse extrudiert wird. Bei dieser Herstellungsweise kann es zu einem unruhig strukturierten Schlauch kommen, bei dem sogar sogenannte "Dopplungen" zwischen benachbarten Schichten, d.h. ungewollte Vermischungen der Materialien zweier aufeinandertreffender Schichten, auftreten können.

Dem breiten Anwendungsgebiet von im Blasverfahren hergestellten Artikeln aus mehrschichtigen Vorformlingen entspricht die Vielfalt der Möglichkeiten der Anordnung und Beschaffenheit der einzelnen Schichten. Häufig kommt es darauf an, durch eine Sperrschicht die Diffusion des Inhalts oder von Teilen des Inhalts des geblasenen Hohlkörpers zu verhindern, aber Anordnung und Beschaffenheit der Sperrschicht hängen auch von der Art des Stoffes ab, dessen Diffusion "gesperrt" werden soll. Daneben spielt die Festigkeit, Steifigkeit sowie selbstverständlich der Preis eine Rolle, aber auch ästethische Gesichtspunkte, z.B. der außen sichtbare Glanz können Art und Lage der Schicht oder Schichten im Schichtenverbund beeinflussen. In der Regel ist es so, daß die Sperrschicht, die beispielsweise aus EVOH oder PA bestehen kann und die beispielsweise aus PE oder PP bestehenden Trägerschichten unterschiedlich physikalische Eigenschaften aufweisen, wozu auch ihr Fließverhalten gehört. Da die Haftvermittlerschicht hingegen im allgemeinen denselben molekularen Grundaufbau wie die zugehörige Trägerschicht hat, haben diese beiden Schichten ähnliche physikalische Eigenschaften und damit auch ein ähnliches Fließverhalten.

Bei den bisher üblichen Co-Extrusionsköpfen münden die die einzelnen Kunststoffschichten führenden Ringkanäle einzeln in einem ausgeprägten axialen Abstand voneinander in den inneren Hauptspeisekanal, z.B. in der Weise, daß sich zunächst die innere Trägerschicht mit der inneren Haftvermittlerschicht vereinigt, zu der dann die Sperrschicht hinzukommt. Bevor dann in einigem axialen Abstand die äußere Haftvermittlerschicht einmündet, wird das aus der inneren Trägerschicht, der inneren Haftvermittlerschicht und der Sperrschicht bestehende Laminat über eine beträchtliche Strecke gemeinsam in dem Speisekanal geführt, wobei die innere Trägerschicht und die Sperrschicht in Kontakt mit den Begrenzungswänden des Speisekanals stehen und unterschiedlichen Fließwiderständen ausgesetzt sind. Diese führen zu starken Scherspannungen innerhalb der Schichten und zwischen den einzelnen Schichten. Diese bewirken die vorstehend angesprochenen Strukturfehler innerhalb des Schlauches und die Vermischung der aneinander angrenzenden Materialien, so daß die schließlich aus dem Schlauch hergestellten Hohlkörper eine mindere Qualität aufweisen.

Aus der US-PS 4 522 775 ist zwar ein Co-Extrusionskopf bekannt, bei dem die verschiedenen Kunststoffschichten nicht einzeln im axialen Abstand voneinander dem inneren Hauptspeisekanal zugeführt werden, sondern bei dem vorher die Sperrschicht und die sie einbettenden Haftvermittlerschichten zusammengeführt werden, bevor dieses Laminat mit der inneren Trägerschicht vereinigt wird. Dies mag die Vereinigung der dünnen Sperrschicht und Haftvermittlerschichten mit der erheblich stärkeren Trägerschicht erleichtern, vermeidet jedoch nicht die aus dem unterschiedlichen Fließverhalten der Haftvermittlerschichten und der Sperrschicht herrührenden Strukturfehler, da auch bei diesem bekannten Co-Extrusionskopf ein aus einer Haftvermittlerschicht und einer Sperrschicht bestehendes Laminat über eine beträchtliche Wegstrecke so in einem Speisekanal geführt wird, daß die beiden, unterschiedliche Fließwiderstände aufweisenden Schichten an den Begrenzungswänden des Speisekanals anliegen.

Der vorliegenden Erfindung liegt damit die Aufgabe zugrunde, einen Co-Extrusionskopf der eingangs genannten Art so weiterzuentwickeln, daß Strukturfehler in dem herzustellenden Schlauch, beispielsweise in Form von Vermischungen zweier angrenzender Schichten, mit Sicherheit vermieden werden.

Diese Aufgabe löst die Erfindung mit den in den Ansprüchen angegebenen Mitteln.

Mit dieser Ausbildung des erfindungsgemäßen Co-Extrusionskopfes wird vermieden, daß bei der Führung zusammengesetzter Schichten unterschiedliche Fließwiderstände auftreten, die zu Scherspannungen führen könnten. Die Schicht, beispielsweise Sperrschicht, die ein anderes Fließverhalten als die anderen Schichten aufweist, beispielsweise als die Haftvermittlerschichten, wird nach ihrem Austritt aus dem zugehörigen Speisekanal entweder unmittelbar zwischen diese beiden Haftvermittlerschichten aufgenommen, wenn die drei zugehörigen Speisekanäle eine gemeinsame Einmündung haben, oder dann, wenn aus konstruktiven Gründen zwei getrennte Einmündungen erforderlich oder zweckmäßig sind, nach einer derart geringen Wegstrecke nach ihrer Vereinigung mit einer Haftvermittlerschicht von der zweiten Haftvermittlerschicht überdeckt, daß das unterschiedliche Fließverhalten infolge der äußerst geringen Fließstrecke keine nennenswerten Scherspannungen entwickeln kann, so daß keine Strukturfehler in dem Schlauch entstehen können.

Die Schicht abweichender Struktur und damit Fließverhaltens, und das ist in der Regel die Sperrschicht, muß also dann, wenn sie mit weiteren Schichten zusammenkommt, von beiden Seiten gewissermaßen erfaßt und in Richtung auf die Austrittsdüse gezogen werden. Dann bekommt die in der Mitte zwischen zwei Schichten liegende Sperrschicht soz. beiseitig einen Halt und durch den Zug nach unten in Richtung auf die Austrittsdüse verbleibt keine Zeit für das Eindringen einer ihr benachbarten Schicht.

Mit Vorteil wird ferner vorgeschlagen, daß die die Haftvermittlerschichten enthaltenden Speisekanäle im Bereich der gemeinsamen Einmündung bereits die jeweils zugehörige Trägerschicht führen. Die Vereinigung der einen, z.B. inneren Trägerschicht und der anderen, z.B. äußeren Trägerschicht, mit der jeweils zugehörigen Haftvermittlerschicht vor der gemeinsamen Einmündung bzw. den axial nahe beieinanderliegenden Einmündungen ermöglicht es, diese so nahe an der Austrittsdüse des Co-Extrusionskopfes auszubilden, wie dies konstruktiv möglich ist. Dies hat insbesondere dann, wenn die innere Trägerschicht und die innere Haftvermittlerschicht aus anderen Materialien bestehen als die äußere Trägerschicht und/oder ihre zugehörige Haftvermittlerschicht, und sich das innere Laminat von dem äußeren Laminat hinsichtlich des Fließverhaltens unterscheidet, den Vorteil, daß auch hinter der gemeinsamen Einmündung bzw. den axial nahe beieinanderliegenden Einmündungen keine nennenswerten Scherspannungen innerhalb der Schichten und zwischen den Schichten infolge der unterschiedlichen Fließwiderstände an den Begrenzungswänden entstehen können, da hierzu die verbleibende Wegstrecke bis zu Austrittsdüse zu gering ist.

Alternativ hierzu kann es zweckmäßig sein, daß der die innere Haftvermittlerschicht enthaltende Speisekanal im Bereich der gemeinsamen Einmündung bzw. der nahe beieinanderliegenden Einmündungen bereits mit dem die innere Trägerschicht führenden Speisekanal vereinigt ist, während der die äußere Trägerschicht führende Speisekanal in Fließrichtung nachfolgend zugeführt wird. Hierdurch läßt sich die Anordnung der die Speisekanäle enthaltenden ringförmigen Segmente des C-Extrusionskopfes einfacher gestalten, da nicht alle Speisekanäle in einem Punkt zusammenlaufen. Es ist auch bekannt, in den Schichtenaufbau eines co-extrudierten Schlauches eine sog. "Abfallschicht" (auch "Regenerat-Schicht" oder "regrind" genannt) einzubauen, d.h. eine Schicht, die aus dem entsprechend aufbereiteten Abfall besteht, der häufig am Hals und am Boden bei der Herstellung von Hohlkörpern aus schlauchförmigen Vorformlingen entsteht. Da der so entstandene Abfall sowohl Trägerschicht-als auch Sperrschicht- wie Haftvermittlerschichtmaterial enthält, kann die Abfallschicht als Trägerschicht oder zusätzliche Trägerschicht dienen, aber unter Umständen auch wegen ihres in manchen Fällen genügenden Anteils an Haftvermittlerschicht eine besondere Haftvermittlerschicht, zumindest zwischen dieser Abfallschicht und einer anderen Schicht, z.B. Trägerschicht, entbehrlich machen. In der Praxis kann aber das Abfallmaterial eine sehr unterschiedliche Zusammensetzung aufweisen, so daß es zweckmäßig oder auch erforderlich sein kann, ihm vor seiner Verwendung als Schichtbildner eines gewissen Prozentsatz an Neumaterial beizugeben. Auch in diesem Fall des Einbaus einer Abfallschicht in den Schichtenverbund ist die Erfindung anwendbar, wofür in der Regel ein zusätzlicher Speisekanal genügt, der in der Regel zwischen innerer Trägerschicht und innerer Haftvermittlerschicht und/oder äußerer Trägerschicht und äußerer Haftvermittlerschicht anzuordnen ist.

Die Erfindung ist nachfolgend anhand der Zeichnung an einigen bevorzugten Ausführungsformen beschrieben, aus denen sich auch weitere Einzelheiten der Erfindung ergeben. Es stellen dar:

Fig. 1    einen Längsschnitt durch den die einzelnen Schichten führenden, Speisekanäle enthaltenden unteren Teil eines erfindungsgemäßen Co-Extrusionskopfes;

Fig. 2    einen Längsschnitt durch eine zweite Ausführungsform und

Fig. 3    einen Halb-Längsschnitt durch eine weitere Ausführungsform in einem gegenüber den Fig. 1 und 2 vergrößerten Maßstab.

3

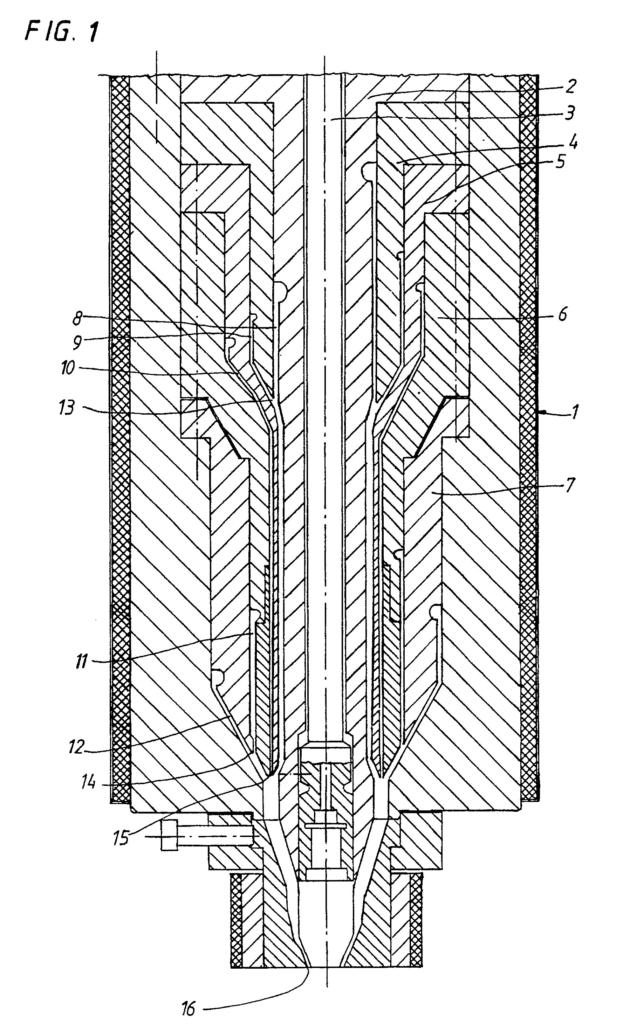

In Fig. 1 ist der untere Teil einer ersten Ausführungsform des erfindungsgemäßen Co-Extrusionskopfes 1 dargestellt, der im Zusammenhang mit der Erfindung von Bedeutung ist. Um einen mittigen Dorn 2 mit Tragspindel 3 sind ring- oder hülsenförmige Segment 4 bis 7 angeordnet, deren Außen- und Innenwände Speisekanäle 8 bis 12 bilden, die von nicht aus der Zeichnung ersichtlichen, bekannten Herzkurven gespeist werden, in deren Anfang je ein Extruder mündet.

Es sei, weil das eine bevorzugte Schichtanordnung darstellt, nachfolgend angenommen, daß bei den beschriebenen und dargestellten Ausführungsformen die Speisekanäle, also bei der Ausführungsform nach der Fig. 1, die Speisekanäle 8 bis 12 in der Reihenfolge ihrer Numerierung eine innere Trägerschicht, eine innere Haftvermittlerschicht, eine mittige Sperrschicht, eine äußere Haftvermittlerschicht und eine äußere Trägerschicht führen. Dann mündet die in dem Speisekanal 9 geführte innere Haftvermittlerschicht bei 13 in den die innere Trägerschicht führenden Speisekanal 8, während der die äußere Trägerschicht führende Speisekanal 12 und der die äußere Haftvermittlerschicht führende Speisekanal 11 sich an der Einmündung 14 vereinigen. Das so entstandene innere Laminat, die in dem Speisekanal 10 geführte Sperrschicht und das äußere Laminat vereinigen sich an einer gemeinsamen Einmündung 15, wo - im Querschnitt - im wesentlichen an einem Punkt die Sperrschicht zwischen die beiden Haftvermittlerschichten aufgenommen wird. Die Einmündung 15 liegt in der Nähe der Austrittsdüse 16, aus der der fertige Schlauch austritt. Da die Sperrschicht nach ihrem Austritt aus dem zugehörigen Speisekanal 10 sofort zwischen die beiden Haftvermittlerschichten aufgenommen wird und nach ihrer Vereinigung mit diesen nicht mehr mit einer Begrenzungswand eines Speisekanals in Berührung gerät, kann ihr abweichendes Fließverhalten mangels Berührung mit einer Begrenzungswand nicht zur Geltung kommen und keine Scherspannungen innerhalb der Schichten und zwischen den einzelnen Schichten hervorrufen. Anstelle einer Trägerschicht oder zusätzlich zu einer solchen kann auch eine Abfallschicht eingesetzt werden.

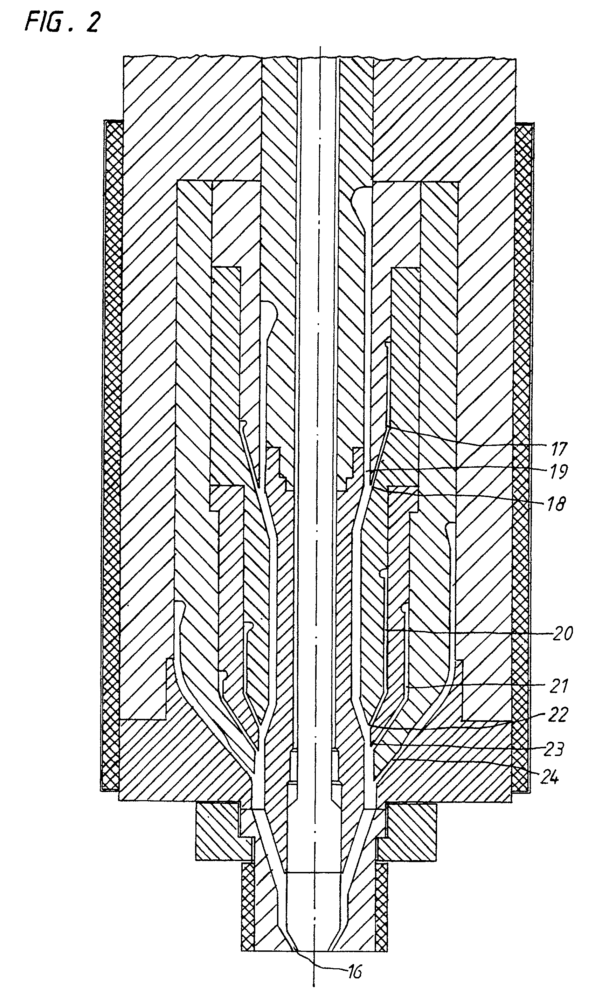

Bei der in Fig. 2 dargestellten Ausführungsform der Erfindung mündet zunächst der die innere Haftvermittlerschicht führende Speisekanal 17 bei 18 in den die innere Trägerschicht führenden Speisekanal 19. Die in den Speisekanälen 20 und 21 geführte Sperrschicht und äußere Haftvermittlerschicht werden an Einmündungen 22 und 23 dem inneren Laminat zugeführt, wobei die Einmündungen 22 und 23 so nahe beieinanderliegen, daß sich das unterschiedliche Fließverhalten der Sperrschicht und der inneren Trägerschicht während der kurzen Fließstrecke bis zur Einmündung 23, an der die Sperrschicht von der äußeren Haftvermittlerschicht überdeckt wird, nicht bemerkbar machen kann. Der Speisekanal 24 führt anschließend die äußere Trägerschicht zu, so daß der herzustellende Schlauch kurz vor Austritt aus der Düse 16 fertiggestellt ist.

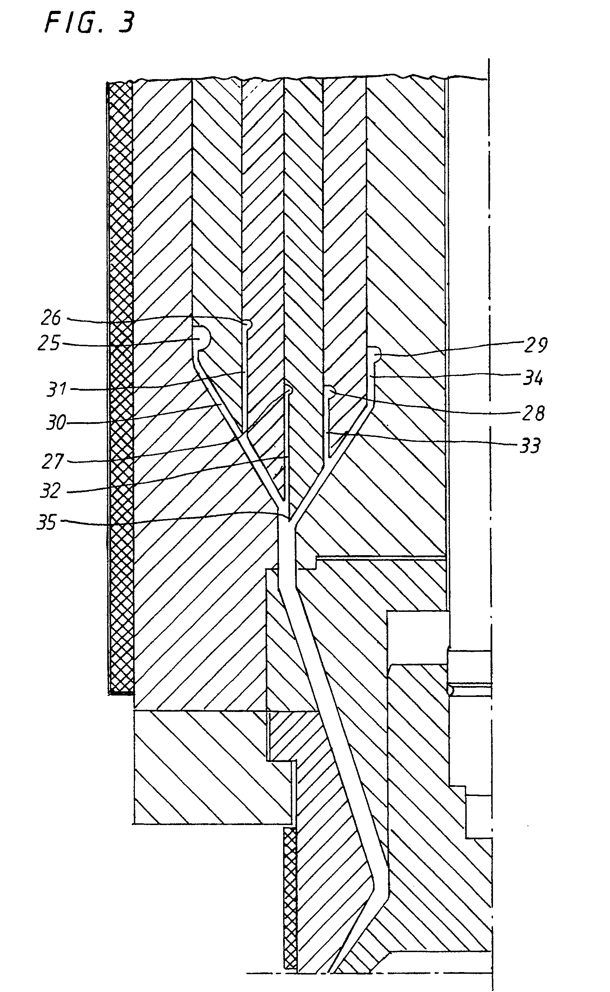

Bei den Ausführungsformen nach den Fig. 1 und 2 werden die einen gleichen oder annähernd gleichen molekularen Grundaufbau aufweisenden Schichten, also die in den Kanälen 12 und 11 bzw. 21 und 22 gebildeten Schichten in verhältnismäßig großem axialem Abstand von den anderen Schichten gleichen oder annähernd gleichen molekularen Grundaufbaus gebildet. Wenn man die Kanäle derart im Kopf verteilt, kann man die verschiedenen Extruder ohne gegenseitige Behinderung und so, daß man an sie auch gut herankommt, über die Höhe des Kopfes verteilen. Man kann aber auch durch eine geeignete Ausbildung der Herzkurven erreichen, daß die Extruder über die Höhe des Kopfes einen genügenden axialen Abstand aufweisen und die unteren Einmündungen 25 bis 29 derselben in die Kanäle 30 bis 34 in der Höhe verhältnismäßig dicht beieinanderliegen, wie das Fig. 3 veranschaulicht. Dadurch werden wesentlich kürzere Fließstrecken und auch Zusammenfließstrecken, z.B. zwischen den Kanälen 30 und 31 für die äußere Trägerschicht und Haftvermittlerschicht erzieht. Auch in diesem Falle wird das aus den Schichten in den Kanälen 30, 31 und 32 mit der innen liegenden Sperrschicht gebildete Laminat im Endteil des Kanals 33 nur eine sehr kurze Wegstrecke 35 geführt, bis die Sperrschicht auf der Innenseite von dem Laminat aus den Schichten 33 und 34 bedeckt und abwärts geführt wird.

Allen dargestellten und beschriebenen Ausführungsformen der Erfindung ist gemeinsam, daß die Schicht (oder Schichten), die ein anderes Fließverhalten als die übrigen Schichten aufweist, nicht oder nur über eine vernachlässigbar kurze Strecke in der Weise im Verbund mit anderen Schichten transportiert wird, daß sie in Berührung mit einem Wandabschnitt eines Speisekanals steht. Dies hat zur Folge, daß bei allen stufenweise ausgebildeten Laminaten die Entstehung von nennenswerten Scherspannungen in einzelnen Schichten und zwischen den Schichten vermieden ist, so daß der schließlich ausgebildete Schlauch vollkommen frei von Strukturfehlern ist.

Je weniger Strukturfehler, insbesondere die sog. "Dopplung", aber im Schichtaufbau, und die insbesondere innerhalb der Sperrschicht und Haftvermittlerschichten, zu befürchten sind, desto dünner können diese Schichten ausgebildet werden, was allgemein angestrebt wird.

## Bezugszeichenaufstellung

| 1 | Co-Extrusionskopf | Fig.1 |
| 2 | Dorn | " |
| 3 | Tragspindel | " |
| 4 | ringförmiges Segment | " |
| 5 | ringförmiges Segment | " |
| 6 | ringförmiges Segment | " |
| 7 | ringförmiges Segment | " |
| 8 | Speisekanal (z.B. für innere Trägerschicht) | " |
| 9 | Speisekanal (z.B. für innere Haftvermittlersch.) | " |
| 10 | Speisekanal (z.B. für Sperrschicht | " |
| 11 | Speisekanal (z.B. für äußere Haftvermittlersch.) | " |
| 12 | Speisekanal (z.B. für äußere Trägerschicht) | " |
| 13 | Einmündung | " |
| 14 | Einmündung | " |
| 15 | gemeinsame Einmündung | " |
| 16 | Austrittsdüse | " |
| 17 | Speisekanal (für innere Haftvermittlerschicht) | Fig.2 |
| 18 | Einmündung | " |
| 19 | Speisekanal (für innere Trägerschicht) | " |
| 20 | Speisekanal (für Sperrschicht) | " |
| 21 | Speisekanal (für äußere Haftvermittlerschicht) | " |
| 22 | Einmündung | " |
| 23 | Einmündung | " |
| 24 | Speisekanal (für äußere Trägerschicht) | " |
| 25 | (Herzkurven)-Einmündung | Fig.3 |
| 26 | (Herzkurven)-Einmündung | " |
| 27 | (Herzkurven)-Einmündung | " |
| 28 | (Herzkurven)-Einmündung | " |
| 29 | (Herzkurven)-Einmündung | " |
| 30 | Speisekanal (für äußere Trägerschicht) | " |
| 31 | Speisekanal (für innere Haftvermittlerschicht) | " |
| 32 | Speisekanal (für Sperrschicht) | " |
| 33 | Speisekanal (für innere Haftvermittlerschicht) | " |
| 34 | Speisekanal (für äußere Trägerschicht) | " |
| 35 | gemeinsame Wegstrecke | " |

## Ansprüche

1. Co-Extrusionskopf für die kontinuierliche Herstellung von als Vorformlinge in Blasformen weiter zu verarbeitenden, co-extrudierten Schläuchen aus mehreren Kunststoffschichten, die mindestens eine oder mehrere Trägerschichten, meist eine Sperrschicht und zwischen diesen Haftvermittlerschichten aufweisen, mit koaxial angeordneten, die von zugehörigen Extrudern eingespeisten Kunststoffschichten führenden, ringförmigen Speisekanälen, die, die Schichten des Schlauches bilden, ineinander einmünden, bevor der fertige Schlauch durch eine Düse austritt, dadurch **gekennzeichnet,** daß der oder die Speisekanäle für eine oder mehrere, im molekularen Aufbau und ihrem Fließverhalten gegenüber den übrigen Schichten abweichenden Schichten und die Speisekanäle für je eine beidseitig angrenzende Schicht, sich an einer gemeinsamen Einmündung oder an getrennten, jedoch axial nahe beieinanderliegenden Einmündungen vereinigen.

2. Co-Extrusionskopf nach dem Anspruch 1, dadurch **gekennzeichnet,** daß der innere Haftvermittlerschicht enthaltende Speisekanal (9,17,33), der ausschließlich die Sperrschicht führende Speisekanal (10,20,32) und der die äußere Haftvermittlerschicht enthaltende Speisekanal (11,21,31) sich an einer gemeinsamen Einmündung (15) oder an zwei getrennten, jedoch axial nahe beieinanderliegenden Einmündungen (22,23) vereinigen.

3. Co-Extrusionskopf nach dem Anspruch 2, dadurch **gekennzeichnet,** daß die die innere und die äußere Haftvermittlerschicht enthaltenden Speisekanäle (9,11) im Bereich der gemeinsamen Einmündung (15) ferner bereits die jeweils zugehörige Trägerschicht führen.

4. Co-Extrusionskopf nach dem Anspruch 2, dadurch **gekennzeichnet,** daß der die innere Haftvermittlerschicht enthaltende Speisekanal (17) im Bereich der gemeinsamen Einmündung bzw. der nahe beieinanderliegenden Einmündungen (22,23) bereits mit dem die innere Trägerschicht führenden Speisekanal (19) vereinigt ist, während der die äußere Trägerschicht führende Speisekanal (24) in Fließrichtung nachfolgend zugeführt wird.

5. Co-Extrusionskopf nach den Ansprüchen 2 oder 3, dadurch **gekennzeichnet,** daß die gemeinsame Einmündung (15) oder die nahe beieinanderliegenden Einmündungen (22,23) in Nähe der Austrittsdüse (16) liegen.

6. Co-Extrusionskopf nach den Ansprüchen 1 bis 5, **gekennzeichnet** durch mindestens einen zusätzlichen Speisekanal für eine Abfallschicht zwischen der inneren Trägerschicht (8,19,34) und der inneren Haftvermittlerschicht (9,17,33) und/oder der äußeren Trägerschicht (12, 30) und der äußeren Haftvermittlerschicht (11,21,31).

**Claims**

1. A coextrusion head for the continuous production of coextruded tubes, which are to be processed further as preforms in blowing moulds, from several synthetic-material layers which have at least one or more carrier layers, usually a barrier layer and, between these, adhesion-imparting layers; with coaxially arranged annular feed canals which guide the synthetic-material layers fed from associated extruders and which discharge into each other, thus forming the layers of the tube, until the finished tube emerges through a nozzle, characterised in that the feed canal(s) for one or more layers whose molecular structure and flow behaviour differ from those of the remaining layers, and the feed canals for two layers, one adjoining on each side, meet at a common junction or at separate, though axially close, junctions.

2. A coextrusion head according to Claim 1, characterised in that the feed canal (9, 17, 33) containing the inner adhesion-imparting layer, the feed canal (10, 20, 32) guiding the barrier layer exclusively and the feed canal (11, 21, 31) containing the outer adhesion-imparting layer meet at a common junction (15) or at two separate, though axially close, junctions (22, 23).

3. A coextrusion head according to Claim 2, characterised in that the feed canals (9, 11) containing the inner and the outer adhesion-imparting layer also guide the respectively associated carrier layer in the region of the common junction (15).

4. A coextrusion head according to Claim 2, characterised in that the feed canal (17) containing the inner adhesion-imparting layer is already joined with the feed canal (19) guiding the inner carrier layer, in the region of the common junction and/or the junctions (22, 23) which lie close together, whilst the feed canal (24) guiding the outer carrier layer is subsequently conveyed in the flow direction.

5. A coextrusion head according to Claims 2 or 3, characterised in that the common junction (15) or the junctions (22, 23) lying close together are located near the outlet nozzle (16).

6. A coextrusion head according to Claims 1 to 5, characterised by at least one additional feed canal for a waste layer between the inner carrier layer (8, 19, 34) and the inner adhesion-imparting layer (9, 17, 33) and/or the outer carrier layer (12, 30) and the outer adhesion-imparting layer (11, 21, 31).


**Revendications**

1. Tête de coextrusion pour la production continue de tuyaux souples coextrudés, faits de plusieurs couches de matière(s) plastique(s) et destinés, en tant qu'ébauches, à être façonnés dans un moule de soufflage, ces tuyaux présentant au moins une ou plusieurs couches-supports, le plus souvent une couche d'arrêt et, entre elles, des couches d'agent d'adhérence, dotée de canaux d'alimentation annulaires agencés coaxialement, qui amènent les couches de matière(s) plastique(s) introduites par les extrudeuses conjuguées et qui, en formant les couches du tuyau souple, débouchent les uns dans les autres avant que le tuyau souple fini sorte par une buse, caractérisée par le fait que le ou les canaux d'alimentation pour une ou plusieurs couches dont la structure moléculaire et le comportement rhéologique diffèrent par rapport aux autres couches, et les canaux d'alimentation pour une couche adjacente de chaque côté, se réunissent en une embouchure commune ou en des embouchures séparées qui sont néanmoins axialement proches les unes des autres.

2. Tête de coextrusion selon la revendication 1, caractérisée par le fait que le canal d'alimentation (9, 17, 33) contenant la couche intérieure d'agent d'adhérence, le canal d'alimentation (10, 20, 32) amenant exclusivement la couche d'arrêt et le canal (11, 21, 31) contenant la couche extérieure d'agent d'adhérence se réunissent en une embouchure commune (15) ou en deux embouchures séparées (22, 23) toutefois axialement proches l'une de l'autre.

3. Tête de coextrusion selon la revendication 2, caractérisée par le fait que les canaux d'alimentation (9, 11) contenant la couche d'agent d'adhérence intérieure et la couche d'agent d'adhérence extérieure amènent en outre, dans la région de l'embouchure commune (15) chaque couche-support y afférente.

4. Tête de coextrusion selon la revendication 2, caractérisée par le fait que le canal d'alimentation (17) contenant la couche intérieure d'agent d'adhérence est réuni au canal d'alimentation (19) amenant la couche-support intérieure, dans la région de l'embouchure commune ou encore des embouchures (22, 23) proches l'une de l'autre, tandis que le canal d'alimentation (24) amenant la couche-support extérieure aboutit en aval dans la direction d'écoulement.

5. Tête de coextrusion selon les revendications 2 ou 3, caractérisée par le fait que l'embouchure commune (15) ou les embouchures proches l'une de l'autre (22, 23) se trouvent au voisinage de la buse de sortie (16).

6. Tête de coextrusion selon les revendications 1 à 5, caractérisée par au moins un canal d'alimentation supplémentaire pour une couche de récupération entre la couche-support intérieure (8, 19, 34) et la couche intérieure d'agent d'adhérence (9, 17, 33) et/ou la couche-support extérieure (12, 30) et la couche d'agent d'adhérence extérieure (11, 21, 31).

FIG. 1

FIG. 2

17
19
18

20

21

22

23

24

16

# FIG. 3